# EUROPÄISCHE PATENTSCHRIFT

(11) **EP 0 785 660 B1**
(45) Veröffentlichungstag und Bekanntmachung des Hinweises auf die Patenterteilung: **26.03.2003**
(21) Anmeldenummer: 96114864.0
(22) Anmeldetag: 17.09.1996
(51) Int. Cl.: H04M 1/72

(54) **Schnurlose Telekommunikationseinrichtung**
Cordless telecommunication device
Dispositif de télécommunication sans fil

(30) Priorität: 17.01.1996 DE 19601472
(43) Veröffentlichungstag der Anmeldung: 23.07.1997
(73) Patentinhaber: SIEMENS AKTIENGESELLSCHAFT, 80333 München (DE)
(72) Erfinder: Slomka, Frank, 91056 Erlangen-Dechsendorf (DE)

(56) Entgegenhaltungen:
- EP-A- 0 443 562
- EP-A- 0 594 078
- EP-A- 0 630 140
- GB-A- 2 296 629
- PATENT ABSTRACTS OF JAPAN vol. 095, no. 011, 26. Dezember 1995 (1995-12-26) & JP 07 203174 A (MATSUSHITA GRAPHIC COMMUN SYST INC), 4. August 1995 (1995-08-04) -& US 5 519 763 A (NAMEKAWA ET AL.) 21. Mai 1996 (1996-05-21)

## Beschreibung

Die Erfindung betrifft eine Telekommunikationseinrichtung nach der Gattung des Hauptanspruchs.

Bei sogenannten schnurlosen Telefonen werden häufig Telefax-Geräte und Anrufbeantworter in die Basisstation integriert. Über die digitale Funkschnittstelle können dann ein oder mehrere tragbare Telefone (Handies) angeschlossen werden. Bei diesen Telekommunikationseinrichtungen ist bereits beim Kauf eine Entscheidung darüber erforderlich, ob der Kunde einen Anrufbeantworter oder ein Telefax-Gerät betreiben möchte. Entsteht später ein Bedarf nach einem dieser Zusatzgeräte, so ist mindestens die Basisstation komplett gegen eine Basisstation mit diesen Zusatzgeräten auszutauschen.

Die EP-A-0630 140 offenbart eine Telekommunikationseinrichtung, bei der Endgeräte mehrerer verschiedener Arten über Funkschnittstellen an eine Basisstation anschliessbar sind. Die Basisstation ist dabei zur Verbindung mindestens jeweils eines der Endgeräte mit einem Telekommunikationsnetz eingerichtet.

Die EP-A-0 443 562 offenbart ebenso eine Telekommunikationseinrichtung, bei der Endgeräte mehrerer verschiedener Arten über Funkschnittstellen an eine Basisstation anschliessbar sind. Die Basisstation hat dabei einen Speicher, in dem die Identitäten der Endgeräte gespeichert sind.

Die JP-A-07 203 174 offenbart eine Telekommunikationseinrichtung, bei der Endgeräte mehrerer verschiedener Arten über Funkschnittstellen an eine Basisstation anschliessbar sind, welche dabei zur Verbindung mindestens jeweils eines der Endgeräte mit einem Telekommunikationsnetz eingerichtet ist. In einem speziellen Betriebsmodus werden bei Eingang eines Rufs aus dem Telekommuinikationsnetz drei Faxgeräte von einer Steuereinrichtung der Basisstation gerufen. Antwortet eines der Faxgeräte auf den Ruf, so werden die andere Faxgeräte nicht mehr antworten.

Aufgabe der vorliegenden Erfindung ist es nun, eine Telekommunikationseinrichtung zu schaffen, bei der einem Benutzer eines Endgeräts ein Überblick über den Betrieb der Telekommunikationseinrichtung verschafft wird.

Diese Aufgabe wird durch eine Telekommunikationseinrichtung gemäß Anspruch 1 gelöst. Vorteilhafte Ausgestaltungen sind Gegenstand der Unteransprüche.

Erfindungsgemäß sind Endgeräte mehrerer verschiedener Arten über digitale Funkschnittstellen an eine Basisstation anschliessbar. Vorzugsweise ist dabei vorgesehen, dass die digitalen Funkschnittstellen DECT-Schnittstellen sind.

Außerdem wird gemäß der vorliegenden Erfindung ein von einem automatisch annehmenden Endgerät angenommener Ruf aus dem Telekommunikationsnetz an anderen Endgeräten signalisiert wird. Dadurch können Benutzer der Telekommunikationseinrichtung über das Eintreffen von Fax-Nachrichten oder über die laufende Aufzeichnung eines Gesprächs mit einem Anrufbeantworter informiert werden.

Die erfindungsgemässe Telekommunikationseinrichtung hat ausser der erwähnten Flexibilität den Vorteil, dass ein Verlegen von Telefonleitungen innerhalb des Bereichs der Telekommunikationseinrichtung völlig entfallen kann. So kann beispielsweise innerhalb eines Gebäudes eine einzige Basisstation mehrere Wohnungen versorgen.

Je nach Erfordernissen im einzelnen kann die Basisstation über mehr oder weniger Funktionalitäten von Nebenstellenanlagen verfügen. So kann beispielsweise vorgesehen sein, dass die Basisstation zur Verbindung mindestens jeweils eines der Endgeräte mit einem Telekommunikationsnetz für eine Durchwahl zu den angeschlossenen Endgeräten und/oder für Verbindungen zwischen den angeschlossenen Endgeräten eingerichtet ist.

Eine Weiterbildung der Erfindung besteht darin, dass in einem Speicher in der Basisstation eine Liste über die Art der angeschlossenen Endgeräte abgelegt ist. In einer solchen Liste kann beispielsweise aufgeführt sein, dass das Endgerät Nr. 1 ein Telefax-Gerät ist, das Endgerät Nr. 2 ein Telefon, das Endgerät Nr. 3 ein Anrufbeantworter usw. In dieser Liste kann ferner abgelegt sein, welche Endgeräte automatisch Gespräche annehmen können und nach welcher Anzahl von Rufsignalen das Gespräch angenommen werden soll.

Zur Bedienungserleichterung ist bei dieser Weiterbildung vorgesehen, dass beim Anschliessen eines Endgerätes eine Einschreib-Prozedur zur Speicherung der Art des Endgerätes in dem Speicher und weiterer Betriebsparameter abläuft.

Diese Prozedur kann als interaktives Programm in jedem der anzuschliessenden Endgeräte gespeichert sein.

Bezüglich der Art der Endgeräte sind durch die Erfindung keine Einschränkungen gegeben. Vorzugsweise kommen jedoch als Endgeräte Telefax-Geräte, Anrufbeantworter und neben tragbaren Geräten auch an sich stationäre Telefone mit einer digitalen Funkschnittstelle in Frage.

Die erfindungsgemässe Telekommunikationseinrichtung ermöglicht beispielsweise ein Büro mit mehreren Arbeitsplätzen, ohne eine Verkabelung mit Telefonen und anderen Endgeräten zu versorgen, was insbesondere bei Umzügen innerhalb des Büros vorteilhaft ist.

Ferner kann bei der erfindungsgemässen Telekommunikationseinrichtung vorgesehen sein, dass die Basisstation einen von einem Telefax-Gerät angenommenen Ruf ohne Faxkennung an mindestens ein anderes Endgerät leitet.

Mit einer anderen Weiterbildung der Erfindung wird dadurch, dass die Basisstation ein von einem Anrufbeantworter angenommenes Gespräch an ein Telefon weiterleitet, das abgehoben wird, erreicht, dass trotz laufendem Anrufbeantworter von einem beliebigen Telefon aus das Gespräch weitergeführt werden kann.

Bei einem angeschlossenen Telefax-Gerät, einem angeschlossenen Anrufbeantworter und mindestens einem angeschlossenen Telefon erhalten gemäß einer weiteren Weiterbildung nach einem vom Telekommunikationsnetz eintreffenden Ruf zunächst das Telefax-Gerät und das mindestens eine Telefon Rufsignale, wobei nach einem vom Telefax-Gerät automatisch angenommenen Anruf, der keine Faxkennung erhält, das Telefax-Gerät die Verbindung zur Basisstation unterbricht und die Basisstation Rufsignale an das mindestens eine Telefon und an den Anrufbeantworter sendet.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung eines Ausführungsbeispiels und
- Fig. 2: eine Tabelle, in welcher Angaben zu den einzelnen Endgeräten gespeichert sind.

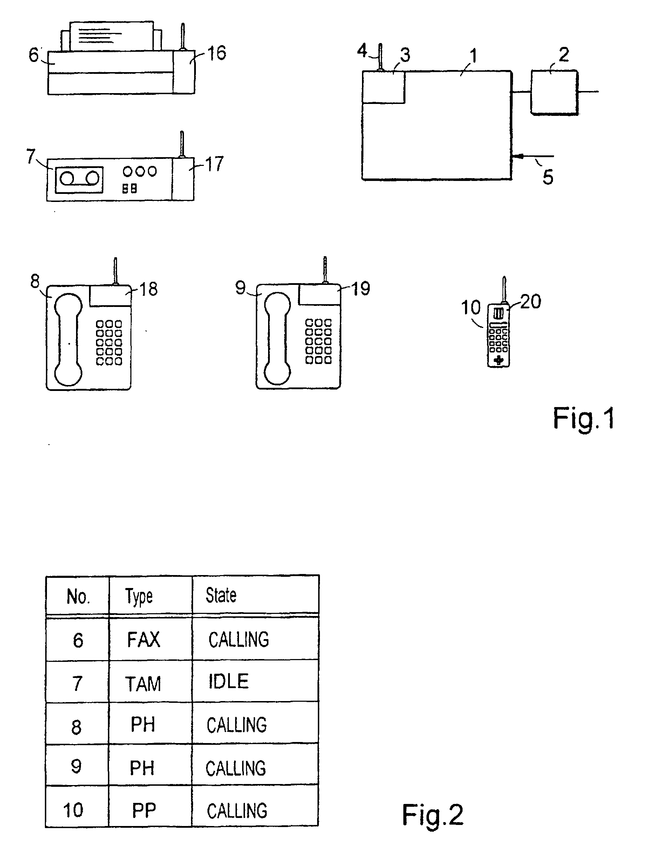

Bei dem Ausführungsbeispiel nach Fig. 1 ist eine Basisstation 1 über eine Anschlußdose 2 mit dem Telekommunikationsnetz verbunden. Die Basisstation weist eine DECT-Schnittstelle 3 mit einer Antenne 4 auf. Ferner wird der Basisstation Netzspannung zugeführt, was durch einen Pfeil 5 symbolisiert ist. Der Basisstation 1 sind ein Telefax-Gerät 6, ein Anrufbeantworter 7, zwei stationäre Telefone 8, 9 und ein Handgerät 10 zugeordnet. Jedes der Geräte 6 bis 10 ist mit einer DECT-Schnittstelle 16 bis 20 ausgerüstet und kann entsprechend den DECT-Protokollen mit der Basisstation und über diese mit den anderen Endgeräten Nachrichten austauschen.

Jedes der Ehdgeräte meldet sich über eine Einschreib-Prozedur an der Basisstation an. Diese an sich bekannte Prozedur wird bei dem dargestellten Ausführungsbeispiel mit einem analogen Telefonanschluß dadurch erweitert, daß durch eine IWU (=Interworking Unit in der obersten DECT-Protokollschicht) der Basisstation die Art des Endgerätes mitgeteilt wird. Während der Einschreib-Prozedur legt der Benutzer an Endgeräten, die ein Gespräch automatisch annehmen können, fest, nach welcher Anzahl von Rufsignalen das Gespräch angenommen werden soll.

In Fig. 2 stellen die linke und die mittlere Spalte ein Beispiel für eine dermaßen in der Basisstation gespeicherte Tabelle dar. In der linken Spalte ist die jeweilige Nummer des Endgerätes aufgeführt - der Übersichtlichkeit halber in Übereinstimmung mit den Bezugszeichen der Fig. 1. Die mittlere, mit "Type" überschriebene Spalte beinhaltet die Art des jeweiligen Endgerätes, während in der Spalte "State" ein zur Zeit vorliegender Betriebszustand wiedergegeben ist. Demnach bedeutet, daß das Endgerät mit der Nr. 6 ein Telefax-Gerät ist und zur Zeit gerufen wird ebenso wie die Endgeräte 8, 9 und 10, die Telefone (PH) oder Handgeräte (PP) sind. Ein Anrufbeantworter (TAM) weist zur Zeit weder eine Verbindung auf, noch wird er gerufen.

Bei dem im folgenden in der Programmiersprache C wiedergegebenen Programm handelt es sich um einen IWU-Prozeß zum Steuern der Schnittstelle für die Telefonleitung und des DECT-Protokolls, wobei zuvor eine Definition einer Struktur, um die in Fig. 2 dargestellte Tabelle abzubilden, und eine Definition der Tabelle vorgenommen wurde. Das dargestellte Programm wird zusammen mit weiteren Programmen von einem in der Basisstation angeordneten Mikrocomputer abgearbeitet. Außer Hinweisen auf andere Transitionen des Prozesses (case ...: other code;) sind nur Programmschritte wiedergegeben, die zur Erläuterung der vorliegenden Erfindung erforderlich

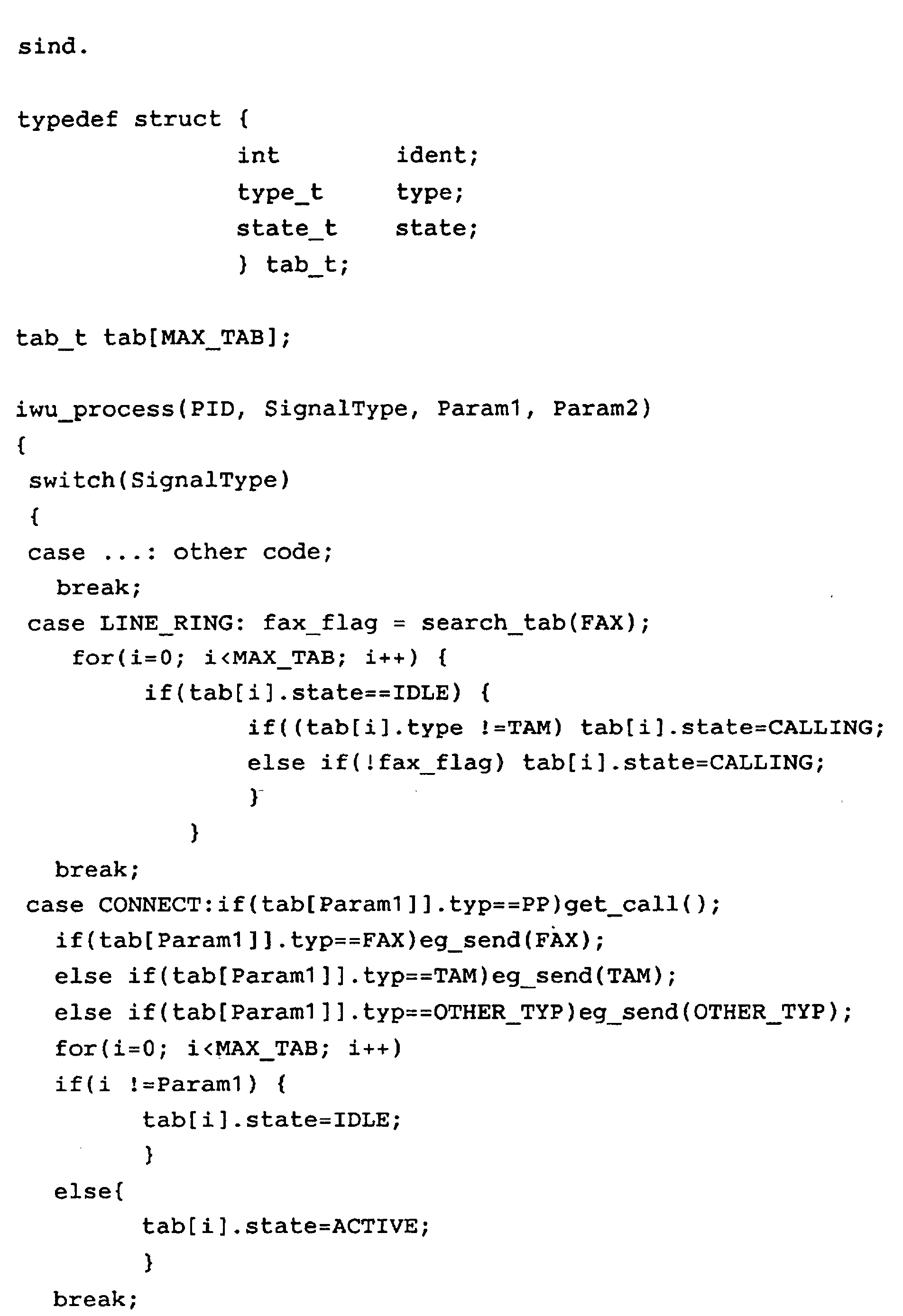

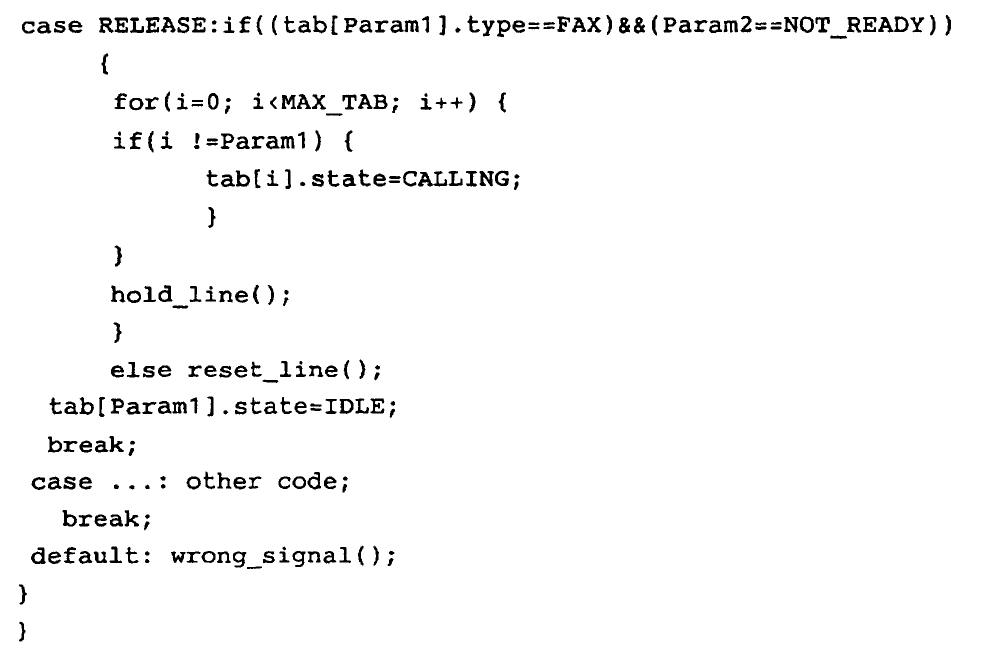

LINE_RING: auf der Telefonleitung wurde ein ankommender Ruf signalisiert, worauf alle in der Tabelle (Fig. 2) eingetragenen Endgeräte in den Zustand CALLING gesetzt werden. Ist sowohl ein Telefax-Gerät als auch ein Anrufbeantworter vorhanden, wird nur das Telefax-Gerät aktiviert. Für das DECT-Protokoll bedeutet dies, daß alle Geräte klingeln sollen.

CONNECT: ein Endgerät meldet, daß es das Gespräch angenommen hat. Bei allen anderen Endgeräten wird dann der Ruf abgeschaltet. Meldet ein Telefon ein CONNECT wird das Gespräch in jedem Fall auf das Telefon umgeleitet. Jedem Handgerät oder weiteren Telefonapparat, der direkt vom Benutzer bedient wird, wird signalisiert, wenn ein automatisches Endgerät das Gespräch entgegengenommen hat. Im Display der Telefone erscheint dann ein entsprechendes Symbol oder eine entsprechende Meldung.

RELEASE: empfängt die Basisstation die Nachricht, daß ein Endgerät ein Gespräch beendet hat, wird der Grund für den Abbruch ermittelt. Wurde das Gespräch normal beendet (Fax empfangen, Anruf entgegengenommen) wird die Telefonleitung abgeschaltet und das System in den Grundzustand gesetzt. Konnte dagegen kein Fax entgegengenommen werden, wird die Anschlußleitung gehalten und den anderen Endgeräten erneut eine Rufsignalisierung zugesendet. Nach einer vom Benutzer einzustellenden Anzahl von Rufzeichen nimmt das angeschlossene Telefax-Gerät den Anruf entgegen. Gleichzeitig werden auch den Telefonen Rufzeichen zugesendet. Nachdem das Telefax-Gerät das Gespräch angenommen hat, wird den Telefonen dies signalisiert. In deren Displays erscheinen entsprechende Meldungen.

Wenn der Anruf von einem anderen Telefax-Gerät ausgeht, erfolgt nun die Übertragung der Telekopien. Stammt jedoch der Anruf von einem Telefon kann das Telefax-Gerät keine Faxkennung detektieren. In dem Telefax-Gerät läuft dann ein Zeitgeber ab - beispielsweise 3 Sekunden, der das Gerät abschaltet. Die Basisstation erkennt dann, daß das Telefax-Gerät vorzeitig "aufgelegt" hat und ruft den Anrufbeantworter und erneut die Telefone. Nach einer ebenfalls vom Benutzer einzustellenden Zahl von Rufzeichen nimmt der Anrufbeantworter das Gespräch entgegen. Dies wird den Telefonen signalisiert. Wird eines der Telefone abgenommen, wird das Gespräch dann automatisch auf dieses Telefon umgelegt. Dieses ist ebenfalls dadurch möglich, daß die Basisstation die Art der Endgeräte kennt.

Im Falle eines ISDN-Anschlusses kann der Ruf einschließlich einer Kennung (Fax-Sprache) direkt zu den Endgeräten weitergeleitet werden. Die Kennung aus dem D-Kanal kann direkt über eine IWU-IWU-Nachricht übertragen werden. Einzelheiten der Anbindung von DECT ans ISDN wird detailliert in der Norm ETS 300 434-1 beschrieben. Ein Telefon muß dann einen Ruf für ein Telefax-Gerät nicht beanworten, während ein Telefax-Gerät den Anruf entgegennehmen kann. Die Behandlung des Anrufbeantworters bei der erfindungsgemäßen Telekommunikationseinrichtung unterscheidet sich im Falle von ISDN nicht von der Behandlung, die oben im Zusammenhang mit einem analogen Telefonanschluß erläutert wurde.

## Patentansprüche

1. Telekommunikationseinrichtung, bei der Endgeräte (6 bis 10) mehrerer verschiedener Arten über digitale Funkschnittstellen (3, 16 bis 20) an eine Basisstation (1) anschliessbar sind, welche zur Verbindung mindestens jeweils eines der Endgeräte (6 bis 10) mit einem Telekommunikationsnetz eingerichtet ist, wobei die Endgeräte (6 bis 10) derartige Endgeräte (6, 7) umfassen, die in der Lage sind, einen Ruf aus dem Telekommunikationsnetz automatisch anzunehmen,
**dadurch gekennzeichnet, daß**
die Basisstation (1) einen von einem automatisch annehmenden Endgerät (6, 7) angenommenen Ruf aus dem Telekommunikationsnetz an anderen Endgeräten (8 bis 10) signalisiert, worauf eine Anzeige in den anderen Endgeräten (8 bis 10) anspricht.

2. Telekommunikationseinrichtung nach Anspruch 1, **dadurch gekennzeichnet, daß** in der Anzeige ein Symbol oder eine Meldung bezüglich des von dem automatisch annehmenden Endgerät (6, 7) angenommenen Rufs erscheint.

3. Telekommunikationseinrichtung nach Anspruch 1 oder 2, **dadurch gekennzeichnet, daß** das automatisch annehmenden Endgerät (6,7) ein Telefax-Gerät (6) oder ein Anrufbeantworter ist.

4. Telekommunikationseinrichtung nach Anspruch 1 oder 3, **dadurch gekennzeichnet, dass** die digitalen Funkschnittstellen DECT-Schnittstellen (3, 16 bis 20) sind.

5. Telekommunikationseinrichtung nach Anspruch 1, **dadurch gekennzeichnet, dass** die Basisstation (1) für eine Durchwahl zu den angeschlossenen Endgeräten (6 bis 10) eingerichtet ist.

6. Telekommunikationseinrichtung nach einem der vorhergehenden Ansprüche, **dadurch gekennzeichnet, dass** die Basisstation (1) für Verbindungen zwischen den angeschlossenen Endgeräten (6 bis 10) eingerichtet ist.

7. Telekommunikationseinrichtung nach einem der vorhergehenden Ansprüche, **dadurch gekennzeichnet, dass** in einem Speicher in der Basisstation (1) eine Liste über die Art der angeschlossenen Endgeräte (6 bis 10) abgelegt ist.

8. Telekommunikationseinrichtung nach Anspruch 7, **dadurch gekennzeichnet, dass** beim Anschliessen eines Endgerätes (6 bis 10) eine Einschreib-Prozedur zur Speicherung der Art des Endgerätes (6 bis 10) in dem Speicher und weiterer Betriebsparameter abläuft.

9. Telekommunikationseinrichtung nach einem der Ansprüche 7 bis 8, **dadurch gekennzeichnet, dass** die Basisstation (1) einen von einem Telefax-Gerät (6) angenommenen Ruf ohne Faxkennung an mindestens ein anderes Endgerät (7) leitet.

10. Telekommunikationseinrichtung nach einem der Ansprüche 7 bis 9, **dadurch gekennzeichnet, dass** die Basisstation (1) ein von einem Anrufbeantworter (7) angenommenes Gespräch an ein Telefon (8 bis 10) weiterleitet, das abgehoben wird.

11. Telekommunikationseinrichtung nach einem der Ansprüche 7 bis 10, **dadurch gekennzeichnet, dass** bei einem angeschlossenen Telefax-Gerät (6), einem angeschlossenen Anrufbeantworter (7) und mindestens einem angeschlossenen Telefon (8 bis 10) nach einem vom Telekommunikationsnetz eintreffenden Ruf zunächst das Telefax-Gerät (6) und das mindestens eine Telefon (8 bis 10) Rufsignale erhalten und dass nach einem vom Telefax-Gerät (6) automatisch angenommenen Anruf, der keine Faxkennung erhält, das Telefax-Gerät (6) die Verbindung zur Basisstation (1) unterbricht und die Basisstation (1) Rufsignale an das mindestens eine Telefon (8 bis 10) und an den Anrufbeantworter (7) sendet.

## Revendications

1. Dispositif de télécommunication dans lequel des terminaux (6 à 10) de plusieurs différentes espèces peuvent être connectés à une station de base (1) via des interfaces radio numériques (3, 16 à 20), ladite station de base étant configurée de manière à pouvoir établir une connexion entre au moins l'un des terminaux (6 à 10) et un réseau de télécommunication et les terminaux (6 à 10) comprenant de tels terminaux (6, 7) capables de prendre automatiquement un appel en provenance du réseau de communication,
**caractérisé en ce que**
la station de base (1) signale la prise d'un appel en provenance du réseau de télécommunication par un terminal (6, 7) avec prise automatique d'appels aux autres terminaux (8 à 10), en réponse à quoi un affichage apparaît dans les autres terminaux (8 à 10).

2. Dispositif de télécommunication selon la revendication 1, **caractérisé en ce que** l'affichage montre un symbole ou un message concernant l'appel pris par le terminal (6, 7) avec prise automatique d'appels.

3. Dispositif de télécommunication selon la revendication 1 ou 2, **caractérisé en ce que** le terminal (6, 7) avec prise automatique d'appels est un télécopieur (6) ou un répondeur téléphonique.

4. Dispositif de télécommunication selon la revendication 1 ou 3, **caractérisé en ce que** les interfaces radio numériques sont des interfaces DECT (3, 16 à 20).

5. Dispositif de télécommunication selon la revendication 1, **caractérisé en ce que** la station de base (1) est configurée pour une sélection directe permettant de joindre les terminaux connectés (6 à 10).

6. Dispositif de télécommunication selon l'une des revendications précédentes, **caractérisé en ce que** la station de base (1) est configurée pour des connexions entre les terminaux connectés (6 à 10).

7. Dispositif de télécommunication selon l'une des revendications précédentes, **caractérisé en ce qu'**une liste renseignant sur l'espèce des terminaux (6 à 10) connectés est déposée dans une mémoire de la station de base (1).

8. Dispositif de télécommunication selon la revendication 7, **caractérisé en ce que**, lors du raccordement d'un terminal (6 à 10), une procédure d'inscription visant à mettre en mémoire l'espèce dudit terminal (6 à 10) et d'autres paramètres de fonctionnement est exécutée.

9. Dispositif de télécommunication selon l'une des revendications 7 à 8, **caractérisé en ce que** la station de base (1) dirige un appel sans identification de fax, mais pris par un télécopieur (6), vers au moins un autre terminal (7).

10. Dispositif de télécommunication selon l'une des revendications 7 à 9, **caractérisé en ce que** la station de base (1) transmet une communication prise par un répondeur téléphonique (7) à un téléphone (8 à 10) auquel on répond.

11. Dispositif de télécommunication selon l'une des revendications 7 à 10, **caractérisé en ce que**, suite à un appel en provenance du réseau de télécommunication et étant donné un télécopieur (6) connecté, un répondeur téléphonique (7) connecté et au moins un téléphone (8 à 10) connecté, d'abord le télécopieur (6) et l'au moins un téléphone (8 à 10), reçoivent des signaux d'appel et **en ce que** le télécopieur (6) interrompt la connexion avec la station de base (1) dans le cas d'un appel pris automatiquement par le télécopieur (6) mais ne contenant pas d'identification de fax et **en ce que** ladite station de base (1) émet des signaux d'appel vers l'au moins un téléphone (8 à 10) et vers le répondeur téléphonique (7).

## Claims

1. Telecommunications device, in which terminals (6 to 10) of a number of different types can be connected via digital radio interfaces (3, 16 to 20) to a base station (1), which is designed for connecting in each case at least one of the terminals (6 to 10) to a telecommunications network, with the terminals (6 to 10) comprising terminals (6, 7) which are able to automatically accept a call from the telecommunications network,
**characterized in that**
the base station (1) signals an incoming call from an automatically accepting terminal (6, 7) from the telecommunications network to other terminals (8 to 10), in response to which an indication is provided in the other terminals (8 to 10).

2. Telecommunications device according to Claim 1, **characterized in that** a symbol or a message relating to the incoming call from the automatically accepting terminal (6, 7) appears in the indication.

3. Telecommunications device according to Claim 1 or 2, **characterized in that** the automatically accepting terminal (6, 7) is a fax machine (6) or an answering machine.

4. Telecommunications device according to Claim 1 or 3, **characterized in that** the digital radio interfaces are DECT interfaces (3, 16 to 20).

5. Telecommunications device according to Claim 1, **characterized in that** the base station (1) is designed for dialling directly to the connected terminals (6 to 10).

6. Telecommunications device according to one of the preceding claims, **characterized in that** the base station (1) is designed for connections between the connected terminals (6 to 10).

7. Telecommunications device according to one of the preceding claims, **characterized in that** a list of the type of connected terminals (6 to 10) is stored in a memory in the base station (1).

8. Telecommunications device according to Claim 7, **characterized in that**, when a terminal (6 to 10) is connected, a writing procedure is carried out in order to store the type of terminal (6 to 10) in the memory, and further operating parameters.

9. Telecommunications device according to one of Claims 7 or 8, **characterized in that** the base station (1) passes a call which is received by a fax machine (6), without a fax identification, to at least one other terminal (7).

10. Telecommunications device according to one of Claims 7 to 9, **characterized in that** the base station (1) passes a call which is received by an answering machine (7) to a telephone (8 to 10) which is off hook.

11. Telecommunications device according to one of Claims 7 to 10, **characterized in that**, when a fax machine (6) is connected, when an answering machine (7) is connected, and when at least one telephone (8 to 10) is connected, the fax machine (6) and the at least one telephone (8 to 10) receive call signals first of all following a call arriving from the telecommunications network, and **in that**, following a call which is accepted automatically by the fax machine (6) but which contains no fax identification, the fax machine (6) interrupts the connection to the base station (1), and the base station (1) sends call signals to the at least one telephone (8 to 10) and to the answering machine (7).
